# EUROPEAN PATENT SPECIFICATION

(11) **EP 4 192 102 B1**
(45) Date of publication and mention of the grant of the patent: **02.04.2025**
(21) Application number: 21212100.8
(22) Date of filing: 02.12.2021
(51) Int. Cl.: H04W 36/00, H04W 36/32

(54) **METHODS FOR IMPROVING A HANDOVER, APPARATUS, VEHICLE AND COMPUTER PROGRAM**
VERFAHREN ZUR VERBESSERUNG EINER ÜBERGABE, VORRICHTUNG, FAHRZEUG UND COMPUTERPROGRAMM
PROCÉDÉS PERMETTANT D'AMÉLIORER UN TRANSFERT, APPAREIL, VÉHICULE ET PROGRAMME INFORMATIQUE

(43) Date of publication of application: 07.06.2023
(73) Proprietor: VOLKSWAGEN AG, 38440 Wolfsburg (DE); Seat, S.A., 08760 Martorell (ES)
(72) Inventor: MONTERO BAYO, Luca, 08028 Barcelona (ES); PFADLER, Andreas, 13357 Berlin (DE)
(74) Representative: 2SPL Patentanwälte PartG mbB

(56) References cited:
- EP-A1- 2 362 236
- EP-A1- 3 952 444
- WO-A1-2020/211687
- WO-A2-2010/105210
- US-A1- 2003 012 265

## Description

The present disclosure relates to the field of wireless communication. Embodiments relate to methods for improving a handover of a mobile communication device, an apparatus, a vehicle and a computer program, more particularly, but not exclusively, to a concept for controlling a communication between a first communication device and a second communication device, e.g., to utilize a radiation boundary area for controlling the communication between the first communication device and the second communication device. The invention is set out in the appended set of claims.

The development of 5G has brought increased attention to the automotive industry as a vertical manufacturer expected to leverage the most advanced features of the new generation of wireless communications. Among the main novelties of 5G, a wide range of spectrum possibilities (currently licensed up to the 28 GHz band - the first-ever Millimeter wave band for mobile use), enhanced support for high mobility scenarios and new mechanisms to guarantee and predict the experienced Quality of Service (QoS), have been established as key functions to support an increasingly connected transportation ecosystem.

US 2018 2018 / 0 076 839 A1 reveals a vehicle, a device or system connected to the vehicle, which enables the vehicle to act as a base station in a wireless communication network. The vehicle includes an access interface transceiver configured to communicate with devices within its passenger cabin, and a backhaul interface transceiver configured to communicate with the wireless communication network. By acting as a base station, the vehicle can establish and provide connectivity between the devices in its passenger cabin and the wireless communication network via the access transceiver and backhaul transceiver.

US 2016 / 0 165 548 A1 reveals an apparatus for setting a transmission power. The apparatus is operable to set a transmission power of a vehicular relay transceiver in a mobile communication system. The relay transceiver is operable in a vehicle to relay information between a mobile transceiver associated with the relay transceiver and a base station transceiver of the mobile communication system. The apparatus comprises a transceiver module which is operable to transmit a common signal using a transmission power. The transmission power influences a coverage area of the relay transceiver. The relay apparatus further comprises a controller module operable to determine information related to a quality of a radio link between the relay transceiver and the base station transceiver and information on a state of the vehicle. The controller module is further operable to set the transmission power based on the information related to the quality of the radio link and based on the information on the state of the vehicle.

US 2010 / 234 071 A1 reveals a core cellular communications platform embedded into the vehicle platform, which utilizes multiple antennas integrated into the body of the vehicle which are coupled to a multi-antenna transceiver. The platform receives electrical power from the vehicle power source eliminating the limitations of handheld device batteries and processes multiple MIMO RF signals taking advantage of antenna diversity, beamforming and spatial multiplexing. Further, the platform executes advanced interference mitigation algorithms and implements adaptive modulation and coding algorithms. Further, the platform utilizes dynamic channel modeling and estimation to significantly improve performance. The core cellular link functions as a platform for any number of vehicle-based applications including a smart vehicle repeater, mobile femtocell, inverted femtocell and vehicle infotainment system.

WO 2020 / 211 687 A1 discloses a method which by introducing a related measurement event based on the location relationship between the network device and the terminal, triggering cell handover measurement may simplify signaling interaction between the network device and the terminal, thereby reducing signaling overheads. A base station performs calculation based on the first threshold, location information of the center point of the serving cell, and a signal coverage area of the serving cell to obtain a handover point location corresponding to the first measurement event, and the base station obtains the measurement moment of the cell handover through calculation based on the handover point location.

US 2003 / 012 265 A1 discloses an apparatus comprising a de-spreading unit, a multipath suppressor, an AOA estimator. The de-spreading unit receives and de-spreads the first and the second spread signals, and outputs the first and the second de-spreaded signals. The multipath suppressor receives the first and the second de-spreaded signals, suppresses the multipath effects and accordingly outputs the first and the second de-noise signals. The AOA estimator receives the first and the second de-noise signals and outputs the angle-of-arrival accordingly.

However, for UE using a mobile communication device a cell (e.g., as relaying system (RS)) of e.g., a bus, train, etc., (e.g., as a new cell between in- or out-cabin mobile devices), it may be still a challenging task to know to which communication device it can connect, e.g., other cells, when terminating a connection to the mobile communication device, e.g., when leaving a coverage area of the mobile communication device (e.g., by leaving a bus, train, etc.). For this purpose, the UE may perform periodically neighbor cell measurements to identify another to which a connection can be established. However, periodically neighbor cell measurements to determine another cell to connect to may cause an undesired data traffic and energy consumption. Therefore, there may be a need to improve a capability of the UE to identify a suitable communication device for connecting to another communication device, e.g., a further RS, a stationary cell, etc., after terminating and/or shortly before terminating a connection to the mobile communication device.

It is therefore a finding that a handover process of the UE can be improved by enabling neighbor cell measurements of the UE, especially by enabling the neighbor cell measurements if a likelihood of exiting and/or entering a coverage area of the cell is increased.

Examples provide a method for improving a handover of a user equipment in a cell of a mobile communication system. The method comprises periodically determining a position of the user equipment inside a coverage area of the cell based on an angle of arrival of a signal received from the user equipment and transmitting information to the user equipment to enable neighbor cell measurements if a change of the periodically determined position indicates an exiting and/or entering of the coverage area of the cell by the user equipment to improve a handover process to another cell. Thus, undesired data traffic caused by periodically neighbor cell measurements can be decreased/avoided by enabling the neighbor cell measurement only if a likelihood for a handover is increased. This way, the UE may only perform neighbor cell measurements when a handover is necessary, e.g., if the UE may leave the coverage area of the cell (e.g., indicated by a change of the periodically position). For example, the UE may approach a door of a bus, train, etc. which mean that a likelihood of leaving the bus, train, etc. is increased. By transmitting the information to enable the neighbor cell measurements from the cell to the UE the UE can selectively start the neighbor cell measurement.

In an example, the method may further comprise transmitting information to disable neighbor cell measurements of the user equipment inside the coverage area of the cell. This way, undesired neighbor cell measurements can be disabled completely, which may decrease a data traffic and/or an energy consumption of the UE.

In an example, the method may further comprise forming a beam with an antenna system in the cell such that an angle of departure of the beam is directed towards the position of the user equipment, adjusting an antenna system parameter to follow a movement of the user equipment with the beam in the coverage area of the cell. Further, the information to enable the neighbor cell measurements may be transmitted if a predefined antenna system parameter is selected by the antenna system. This way, the cell may transmit the information to enable the neighbor cell measurements only if the UE can be located at a specific position in the cell coverage area by the antenna beam.

In an example, the method may further comprise forming a beam with an antenna system in the cell such that an angle of departure of the beam is directed towards the position of the user equipment and adjusting an antenna system parameter to follow a movement of the user equipment with the beam in the coverage area of the cell. Further, the information to enable the neighbor cell measurements may be transmitted if the user equipment is positioned in a predefined area. This way, the UE may receive the information to start the neighbor cell measurements if it is located in a predefined area, e.g., in front of a door of a bus.

In an example, an initial antenna system parameter may result in a beam which is directed towards an entering area of the coverage area of the cell such that if the user equipment enters the entering area of the coverage area of the cell a first determination of the position of the user equipment is performed inside of the entering area by the beam of the antenna system formed with the initial antenna system parameter. This way, the UE can be detected by the cell in an improved way, e.g., shortly after entering the coverage area of the cell.

In an example, the exiting of the user equipment may be indicated when the user equipment is positioned in or is approaching a predefined exit area of the coverage area of the cell. This way, the UE can receive the information to enable the neighbor cell measurement if a likelihood of leaving the coverage area of the cell is increased.

In an example, the information to enable neighbor cell measurements comprises information about a handover list. This way, the UE may receive a handover list which can be utilized by the UE to perform a handover in an improved way.

Examples relates to a method for improving a handover of a user equipment in a cell of a mobile communication system. The method comprises periodically transmitting a signal to the cell if the user equipment is inside a coverage area of the cell and receiving information from the cell to enable neighbor cell measurements. Thus, undesired data traffic caused by periodically neighbor cell measurements can be decreased/avoided by enabling the neighbor cell measurement only if a likelihood for a handover is increased. This way, the UE may only perform neighbor cell measurements when a handover is necessary, e.g., if the UE may leave the coverage area of the cell (e.g., indicated by a change of the periodically position).

In an example, the method may further comprise receiving information to disable neighbor cell measurements of the user equipment inside the coverage area of the cell. This way, undesired neighbor cell measurements can be disabled completely, which may decrease a data traffic and/or an energy consumption of the UE.

In an example, the method may further comprise establishing a communication connection to the cell and wherein the neighbor cell measurements are only disabled if the communication connection is established. This way, it can be ensured that the neighbor cell measurements are only disabled if a connection to the cell is established such that a user of the UE still can use a desired service of the UE. Further, it is ensured that the UE can receive the information from the cell to enable the neighbor cell measurements.

In an example, the information to enable neighbor cell measurements comprises information about a handover list. This way, the UE may receive a handover list which can be utilized by the UE to perform a handover in an improved way.

Examples further provide an apparatus, comprising one or more interfaces configured to communicate with user equipment or a cell. The apparatus further comprises processing circuitry configured to control the one or more interfaces and to perform the method for user equipment and/or a cell described above.

Examples further provide a vehicle comprising the apparatus as described above.

In an example, the vehicle may further comprise an antenna system and wherein an initial antenna system parameter results in a beam which is directed to an outside of the vehicle through a door of the vehicle such that a coverage area of the cell comprises an entering area outside the vehicle. This way, the cell of the vehicle can cover an area outside the vehicle such that an entering area/exiting area outside the vehicle can be formed to detect a UE which may enter/leave the vehicle. For example, each UE in the entering area may receive the information to enable neighbor cell measurements to establish a connection to the cell of the vehicle (for entering) or to another cell (for leaving).

Examples further relate to a computer program having a program code for performing the method described above, when the computer program is executed on a computer, a processor, or a programmable hardware component.

Some examples of apparatuses and/or methods will be described in the following by way of example only, and with reference to the accompanying figures, in which
Fig. 1 shows an example of a method for a cell;
Fig. 2 shows an example of a method for a user equipment; and
Fig. 3 shows a block diagram of a mobile communication device.

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, e.g., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

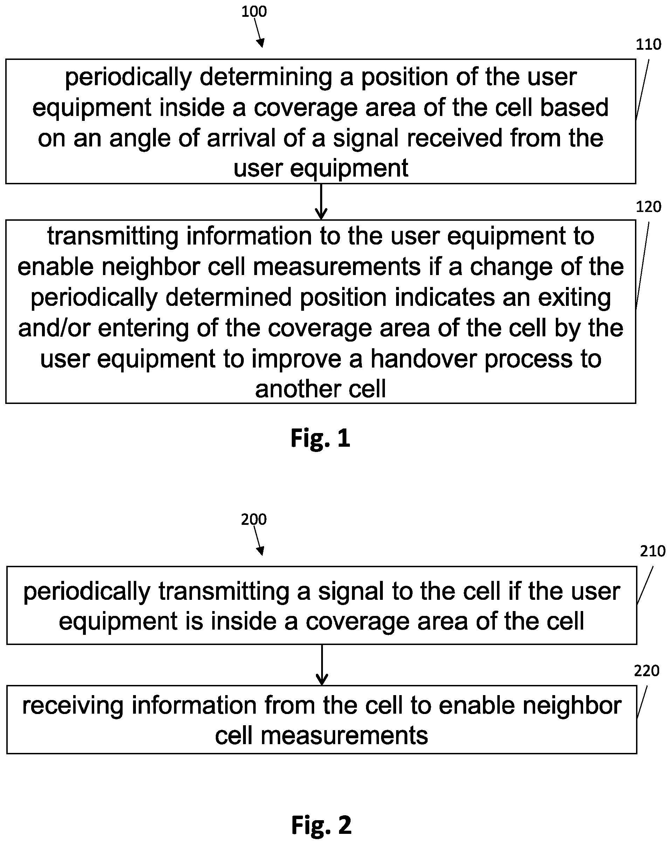

Fig. 1 shows a method 100 for a cell. The method 100 is for improving a handover of a user equipment in a cell of a mobile communication system. The method 100 comprises periodically determining 110 a position of the user equipment inside a coverage area of the cell based on an angle of arrival of a signal received from the user equipment and transmitting 120 information to the user equipment to enable neighbor cell measurements if a change of the periodically determined position indicates an exiting and/or entering of the coverage area of the cell by the user equipment to improve a handover process to another cell. This way, the UE can dynamically adjust the neighbor cell measurements. For example, if a user of the UE uses a vehicle, e.g., a bus, train, comprising the cell, the UE may stop neighbor cell measurements as long as the user is inside of the vehicle. If the user wants to exit the vehicle, e.g., if the user may enter an exiting area in front of a door, the UE can be informed that the cell neighbor measurements should be enabled to identify another cell for a handover. Thus, the UE may only perform cell neighbor measurements when required. This way, a data traffic and/or an energy consumption of the UE can be reduced.

The UE may communicate in a mobile communication system with the cell. For example, the UE and the cell may communicate in/via a mobile communication system. The mobile communication system may comprise a plurality of transmission points and/or base stations operable to communicate radio signals with the UE. In an example, the mobile communication system may comprise the UE and the cell.

A cell can be located in the fixed or stationary part of the network or system, e.g., a bus shelter. A cell may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A cell can be a wireless interface of a wired network, which enables transmission and reception of radio signals to UE, such as the UE. Such a radio signal may comply with radio signals as, for example, standardized by 3GPP or, generally, in line with one or more of the above listed systems. Thus, a cell may correspond to a NodeB, an eNodeB, a BTS, an access point, etc. The cell may correspond to an intermediate network node in the communication path between the UE and a base station. The RS may forward a signal received from UE to a base station, signals received from the base station to the UE, respectively.

In some examples, the cell may also act as a small cell base station, e.g., as a pico cell or femto cell base station. In some examples, the cell may act as signal relay between the UE and a base station. In some examples, the cell may support simultaneous wireless backhaul connections to multiple base stations (of the same or different mobile network operators) and/or simultaneous wireless backhaul connections to the same base station over multiple radio access technologies (e.g., a mmWave-based and a sub-6 GHz-based wireless backhaul connection at the same). In particular, the cell may be associated with, and thus suitable for or configured to connecting/connect to, two or more wireless base stations of two or more mobile network operators. Additionally or alternatively, the cell may be associated with, and thus suitable for or configured to connecting/connect to, one or more base stations using two or more (different) radio access technologies. In some examples, the cell may act as a (internet protocol-based) gateway, suitable for data communication via two or more mobile network operators and/or two or more radio access technologies.

Various examples of the cell may improve the cellular coverage inside a vehicle. A cell may be used in order to connect multiple terminals (UE) inside of the vehicle and provide an aggregated connection to a stationary cellular communication system via a wireless backhaul connection to a stationary cellular communications network, for example, over one or more external vehicle antennas.

Such a cell may, for example, correspond to a relay as defined in 3GPP Release 10 and following, e.g., a moving relay or mobile relay as introduced in connection with 3GPP Release 12 and following, a wireless repeater (analog or digital), or a femto cell with a wireless backhaul connection. In case of a femto cell, the wireless backhaul connection could be provided over a separate cellular communication terminal, e.g., a 2G/3G/4G/5G modem. It is another finding that for the relay connection and for the access connection, respectively, the same or different frequency and spectrum resources can be used. A Relaying system may correspond to an intermediate network node in the communication path between a communication device, e.g., a network entity, and the UE. A Relaying system may forward a signal received from the UE to a communication device, signals received from the communication device to the UE, respectively.

The mobile communication system may be cellular. The term cell refers to a coverage area of radio services provided by a transmission point, a remote unit, a remote head, a remote radio head, communication device, UE or a NodeB, an eNodeB, respectively. The terms cell and base station may be used synonymously. A wireless communication device, e.g., the UE, can be registered or associated with at least one cell, e.g., it can be associated to a cell such that data can be exchanged between the network and the mobile in the coverage area of the associated cell using a dedicated channel, connection or connection.

In general, the UE is a device that is capable of communicating wirelessly. In particular, however, the UE and/or the cell may be mobile, e.g., UE that is suitable for being carried around by a user. For example, the UE may be a User Terminal (UT) or User Equipment (UE) within the meaning of the respective communication standards being used for mobile communication. For example, the UE may be a mobile phone, such as a smartphone, or another type of mobile communication device, such as a smartwatch, a laptop computer, a tablet computer, or autonomous augmented-reality glasses. For example, the cell may be a RS comprised by a vehicle. For example, the UE and the cell may be configured to communicate in a cellular mobile communication system. Accordingly the UE and the com cell may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the UE and the cell may be configured to communicate in a mobile communication system / cellular mobile communication system. In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In addition the UE/cell may be suitable for, or configured to, communicating/communicate via non-cellular communication systems, e.g., via a device-to-device vehicular communication system, e.g., according to the IEEE 802.11p standard (Institute of Electrical and Electronics Engineers standard 802.11p for vehicular communication) or via a wireless local area network (e.g., according to IEEE 802.11a, IEEE 802.11b, IEEE 802.11g, IEEE 802.11n, IEEE 802.11ac or IEEE 802.11ax, also known as Wi-Fi 1 through Wi-Fi 6(E)). In particular, the UE and the cell may be suitable for, or configured to, communicating/communicate in the frequency band between 5 GHz and 7.1 GHz, which covers communication in the 5 GHz band (for WiFi in the 5 GHz band), 5.9 GHz band (for vehicular communication according to the 802.11p standard) and between 5.9 GHz and 7.1 GHz (for WiFi in the 6 GHz band).

A connection between the UE and the cell may be a wireless connection, e.g., a mmWave-based connection over the mobile communication system (e.g., using carrier frequencies of at least 20 GHz) or may be performed at lower carrier frequencies, e.g., using carrier frequencies of at most 7.5 GHz. For example, the wireless connection between the UE and the cell may be initiated using the protocols of the mobile communication system, or using a short-range communication system, such as via a wireless local area network outlined above.

As is evident from the above example, while the communication between UE and cell occurs via the mobile communication system, additional communication and/or alternatively communication (e.g., the cell is comprised by a vehicle) between the UE and the cell may occur via a vehicular communication system. Such communication may be carried out directly, e.g., by means of Device-to-Device (D2D) communication. Such communication may be carried out using the specifications of the vehicular communication system. An example of D2D is direct communication between vehicles, also referred to as Vehicle-to-Vehicle communication (V2V) or Vehicle-to-Everything (V2X), car-to-car, Dedicated Short Range Communication (DSRC), respectively. Technologies enabling such D2D-communication include 802.11p, 3GPP systems (4G, 5G, NR and beyond), etc.

Such a cell corresponds to a relay as defined in 3GPP Release 10 and following, e.g., a moving relay or mobile relay as introduced in connection with 3GPP Release 12 and following, a wireless repeater (analog or digital), or a femto cell with a wireless backhaul connection. In case of a femto cell, the wireless backhaul connection could be provided over a separate cellular communication terminal, e.g., a 2G/3G/4G/5G modem.

For example, UE inside of a vehicle (e.g., for public transport) may use the cell of the vehicle as relaying system, since the cell may offer the best service/signal strength because other cells outside the vehicle may be partially blocked by the vehicle. For this purpose the UE may transmit signals to the cell to use a relaying service of the cell. Based on an angle of arrival the cell may determine a position of the UE. As long as the user is immovable, e.g., sitting on a seat of the vehicle such like a bus, train, etc., the periodically determined position indicates no position change of the UE. When the user wants to leave the vehicle, stands up from seat and moves away from the seat the position of the UE changes and consequently the periodically determined position indicates a movement of the UE. This detected movement of the UE, especially after a certain period of immobility may indicate an exiting of the coverage area of the UE. Consequently, the UE can deactivate neighbor cell measurements as long as the user is immovable and may be informed by the cell that the neighbor cell measurements may be enabled if the UE is moving after a period of immobility, for example.

An exiting and/or entering of the coverage area of the cell by the UE may be indicated if the UE is at predefined position and/or approaches a predefined position. For example, a user of the UE may use a vehicle, e.g., a train, and may be seated in a back of the train. If the user stands up and approaches a door of the train the cell may transmit the information to the UE to enable neighbor cell measurements. In contrast, if the user stands up and goes away from the door, e.g., to sit down at another seat, the cell does not transmit the information to the UE to enable the neighbor cell measurements. If the UE enters a predefined exiting area the cell may transmit the information to the UE to enable the neighbor cell measurements. All information belonging the position/movement of the UE can be determined by the periodically determination of the position of the UE. For this, the communication between the UE and the cell as relaying system may be sufficient to determine periodically the position of the UE.

Optionally, if the vehicle approaches a planned destination, e.g., a train stop, the periodically determination may be adjusted such that the position of the UE is determined at least directly before stopping the vehicle and/or opening the doors of the vehicle.

Periodically means that the position is determined in fixed time intervals and/or for trigger events. For example, the position of the UE may be determined every 1s, 2s, 3s etc. Optionally or alternatively, the position of the UE may be determined for every trigger event of a plurality of trigger events, e.g., each stop on a route. For example, at each stop on a route the cell may determine the position of the UE and if the UE is in the exiting/entering area and/or has changed its position since the last stop the cell may transmit the information to the UE to enable the neighbor cell measurements.

Periodically determining 110 the position of the user equipment may comprise adjusting an antenna system parameter of the antenna system of the cell, e.g., to direct a generated beam towards the UE. For example, the cell may receive a signal from the UE and may form a beam directed towards the UE, e.g., to decrease a signal intensity for communicating with the UE. Thus, the formed beam may follow the UE, e.g. through an inside of a vehicle.

Transmitting 120 the information to the user equipment to enable neighbor cell measurements can be performed by any suitable message, e.g., by a broadcast message, groupcast message or unicast message. Thus, the information to enable neighbor cell measurements can be transmitted in a desired way, e.g., using a unicast message.

In an example, the method 100 may further comprise transmitting information to disable neighbor cell measurements of the user equipment inside the coverage area of the cell. This way, the cell can inform the UE to deactivate the cell neighbor measurements, e.g., to reduce a data traffic and/or an energy consumption. For example, if the cell determines that a position of the UE does not change during at least two periodically determination of the position the cell may transmit information to the UE to disable cell neighbor measurements. Thus, when a user sits on a seat of the vehicle the cell neighbor measurements can be disabled, for example.

In an example, the method 100 may further comprise forming a beam with an antenna system in the cell such that an angle of departure of the beam is directed towards the position of the user equipment, adjusting an antenna system parameter to follow a movement of the user equipment with the beam in the coverage area of the cell. Furter, the information to enable the neighbor cell measurements may be transmitted if a predefined antenna system parameter is selected by the antenna system. For example, a predefined antenna system parameter may be used to radiate a beam in a direction of a door, an aisle, etc. of a vehicle. This way, the cell can both communicate with the UE in an improved way and determine an intention of the UE to exit the vehicle.

In an example, the method 100 may further comprise forming a beam with an antenna system in the cell such that an angle of departure of the beam is directed towards the position of the user equipment and adjusting an antenna system parameter to follow a movement of the user equipment with the beam in the coverage area of the cell. Further, the information to enable the neighbor cell measurements is transmitted if the user equipment is positioned in a predefined area. This way, the cell can transmit the information to the UE to enable the cell neighbor measurements if the UE is at predefined position, e.g., an exiting/entering area.

In an example, an initial antenna system parameter may result in a beam which is directed towards an entering area of the coverage area of the cell such that if the user equipment enters the entering area of the coverage area of the cell a first determination of the position of the user equipment is performed inside of the entering area by the beam of the antenna system formed with the initial antenna system parameter. This way, the cell can improve a determination of the position of the UE. For example, a user of the UE may want to enter a vehicle, e.g. a train, and may stand in front of the door of the train. The antenna system of the train may generate a beam directed towards the door of the train by using the initial antenna system parameter. Thus, a position of the UE can be determined in the entering area associated to the door, which may improve a determination of the position of the UE.

For example, the entering area may be formed outside of the train, e.g., on a train platform, such that the UE may enter the entering area before entering the train. This way, the UE can be informed by the cell about a future handover, e.g., a handover to the cell of the train can be eased and/or improved.

In an example, the exiting of the user equipment may be indicated when the user equipment is positioned in or is approaching a predefined exit area of the coverage area of the cell. This way, the determination of an intention of a user of the UE to leave the coverage of the cell can be improved.

In an example, the information to enable neighbor cell measurements may comprise information about a handover list. This way, a handover process from the cell to another cell can be eased. A handover list (also named neighbor list) comprises communication devices, e.g., cells, which are checked more frequently than the rest of communication devices and thus a handover with a cell of the handover list is more likely. Optionally, the UE may only be allowed to connect to a cell comprised by the handover list (like in Global System for Mobile Communications).

For example, a user of the UE may wait on a train platform (bus stop, etc.) for a train (bus, etc.) and the UE may be connected to a cell of the train platform, e.g., the cell of the train platform offers a relaying service. To reduce data traffic the cell of the platform may transmit information to the UE to disable neighbor cell measurements. Thus, the UE may disable the cell neighbor measurements, which reduces a data traffic and/or safes energy.

If the train arrives at the platform the user of the UE platform may want to enter the train and therefore, he may move to a position from which he can enter the train. For example, this position may be an exiting area of the cell of the platform such that the cell of the platform transmits information to the UE to enable neighbor cell measurements. Alternatively, the cell of the platform may determine that the UE on the platform is moving after a period of being immovable, e.g., a waiting period of the user for the train. Optionally, the cell of the platform may transmit a handover list to the UE, e.g., to inform the UE about a cell of the arriving train. This way, the handover from the cell of the platform to the cell of the train can be improved. Alternatively, if the user of the UE leaves the platform the cell of the platform may transmit information to the UE to enable neighbor cell measurement, e.g., when the user walks along a staircase.

The antenna system of the (arrived) train may form a beam to form an entering area which may overlap/be identical to the exiting area of the platform. Thus, the UE may be in the entering area of the cell of the train while being in the exiting area of the cell of the platform. Thus, the UE can establish a connection to the cell of the train even if the UE has not entered the train. The user may enter the train and the cell neighbor measurement of the UE may be disabled by receiving information from the cell of the train. At a desired future stop of the train the user may leave the train, e.g., the user may enter an exiting area inside or outside the train. For example, the exiting area outside the train may be identical to the entering area. Thus, the neighbor cell measurements of the UE may be enabled again, and the UE may perform cell neighbor measurement when the user leaves the train to connect to another cell outside the train.

More details and aspects are mentioned in connection with the embodiments described or below. The example shown in Fig. 1 may comprise one or more optional additional features corresponding to one or more aspects mentioned in connection with the proposed concept or one or more examples described below (e.g., Fig. 2 - 3).

Fig. 2 shows a method 200 for a user equipment. The method 200 for improving a handover of a user equipment in a cell of a mobile communication system comprises periodically transmitting a signal to the cell if the user equipment is inside a coverage area of the cell and receiving information from the cell to enable neighbor cell measurements. The UE may be a counterpart to the cell described with reference to Fig. 1. This way, the UE can be enabled to reduce unnecessary data traffic by enabling neighbor cell measurements.

In an example, the method 200 may further comprise receiving information to disable neighbor cell measurements of the user equipment inside the coverage area of the cell. This way, the UE can be informed that neighbor cell measurements can be disabled. For example, the UE may be inside of a vehicle, which comprises the cell acting as relaying system for the UE. Thus, the UE may be not capable to establish a sufficient connection to another cell, since signals from/to the other cells may be (partially) blocked by the vehicle. Therefore, as long as the UE is inside the vehicle and not capable to establish a sufficient connection to another cell and/or as long as the cell offers the best connection unnecessary neighbor cell measurements can be avoided.

In an example, the method 200 may further comprise establishing a communication connection to the cell. Further, the neighbor cell measurements are only disabled if the communication connection is established. This way, it can be ensured that the cell disable the neighbor cell measurements not before a communication connection to the cell is established, such that the user can use a service of the UE without interruption.

In an example, the information to enable neighbor cell measurements comprises information about a handover list. This way, the UE can be informed directly about a suitable another cell to connect to.

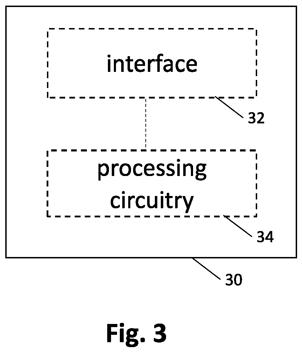

More details and aspects are mentioned in connection with the embodiments described above and/or below. The example shown in Fig. 2 may comprise one or more optional additional features corresponding to one or more aspects mentioned in connection with the proposed concept or one or more examples described above (Fig. 1) and/or below (e.g., Fig. 3).

Fig. 3 shows a block diagram of a mobile communication device 30. The mobile communication device 30 comprises one or more interfaces 32 configured to communicate with a cell or user equipment. The mobile communication device 30 further comprises processing circuitry 34 configured to control the one or more interfaces 34 and to perform the method for the cell as described above (e.g., described with reference to Fig.1) or the method for the UE as described above (e.g., described with reference to Fig. 2).

For example, the mobile communication device 30 can be comprised by a vehicle. For example, the vehicle may be a land vehicle, such a road vehicle, a car, an automobile, an offroad vehicle, a motor vehicle, a bus, a robo-taxi, a van, a truck or a lorry. Alternatively, the vehicle may be any other type of vehicle, such as a train, a subway train, a boat or a ship. For example, the proposed concept may be applied to public transportation (trains, bus) and future means of mobility (e.g., robo-taxis).

In an example, the vehicle may further comprise an antenna system and wherein an initial antenna system parameter results in a beam which is directed to an outside of the vehicle through a door of the vehicle such that a coverage area of the cell comprises an entering area outside the vehicle.

As shown in Fig. 3 the respective one or more interfaces 32 are coupled to the respective processing circuitry 34 at the mobile communication device 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface 32, so that any data transfer that occurs over the interface and/or any interaction in which the interface may be involved may be controlled by the processing circuitry 34.

In an embodiment the apparatus 30 may comprise a memory and at least one processing circuitry 34 operably coupled to the memory and configured to perform the below mentioned method.

In examples the one or more interfaces 32 may correspond to any means for obtaining, receiving, transmitting or providing analog or digital signals or information, e.g., any connector, contact, pin, register, input port, output port, conductor, lane, etc. which allows providing or obtaining a signal or information. An interface may be wireless or wireline and it may be configured to communicate, e.g., transmit or receive signals, information with further internal or external components. The one or more interfaces 32 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

More details and aspects are mentioned in connection with the embodiments described above. The example shown in Fig. 3 may comprise one or more optional additional features corresponding to one or more aspects mentioned in connection with the proposed concept or one or more examples described above (Fig. 1 - 2).

The aspects and features described in relation to a particular one of the previous examples may also be combined with one or more of the further examples to replace an identical or similar feature of that further example or to additionally introduce the features into the further example.

Examples may be compliant to or even comprised in certain standard specifications, such as those specified by the 3GPP. Configuration information may for example be communicated using signaling radio bearers, e.g., by means of Radio Resource Control (RRC) messages, which are, for example, specified in the *.331 series of 3GPP as layer 3 control plane messages. For example, physical layer specification, e.g., by means of Doppler Delay Resolutions and other physical layer specifications may also be affected by present embodiments, e.g., *.201, *.211, *.212, *.213, *.214, *.216 series in the 3GPP specifications.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

### List of reference signs

30 communication device
32 interface
34 processing circuitry
100 method for a cell
110 periodically determining a position
120 transmitting information to the user equipment
200 method for a user equipment
210 periodically transmitting a signal
220 receiving information from the cell

## Claims

1. A method (100) to be executed by a base station for improving a handover of a user equipment in a cell of a mobile communication system, the base station acting as relaying system between the user equipment and another base station, comprising:
transmitting information to disable neighbor cell measurements of the user equipment inside the coverage area of the cell;
periodically determining (110) a position of the user equipment inside a coverage area of the cell based on an angle of arrival of a signal received from the user equipment; and
transmitting (120) information to the user equipment to enable neighbor cell measurements if a change of the periodically determined position indicates an exiting of the coverage area of the cell by the user equipment to improve a handover process to another cell.

2. The method (100) according to any of the preceding claims, further comprising
forming a beam with an antenna system in the cell such that an angle of departure of the beam is directed towards the position of the user equipment;
adjusting an antenna system parameter to follow a movement of the user equipment with the beam in the coverage area of the cell; and wherein
the information to enable the neighbor cell measurements is transmitted if a predefined antenna system parameter is selected by the antenna system.

3. The method (100) according to any of the preceding claims, further comprising
forming a beam with an antenna system in the cell such that an angle of departure of the beam is directed towards the position of the user equipment;
adjusting an antenna system parameter to follow a movement of the user equipment with the beam in the coverage area of the cell; and wherein
the information to enable the neighbor cell measurements is transmitted if the user equipment is positioned in a predefined area.

4. The method (100) according to any of the preceding claims, wherein
an initial antenna system parameter results in a beam which is directed towards an entering area of the coverage area of the cell such that if the user equipment enters the entering area of the coverage area of the cell a first determination of the position of the user equipment is performed inside of the entering area by the beam of the antenna system formed with the initial antenna system parameter.

5. The method (100) according to any of the preceding claims, wherein
the exiting of the user equipment is indicated when the user equipment is positioned in or is approaching a predefined exit area of the coverage area of the cell.

6. The method (100) according to any of the preceding claims, wherein
the information to enable neighbor cell measurements comprises information about a handover list.

7. A method (200) to be executed by a user equipment, UE, for improving a handover of the user equipment in a cell of a mobile communication system, the cell acting as relaying system between the user equipment and a base station, comprising:
receiving information to disable neighbor cell measurements of the user equipment inside the coverage area of the cell;
periodically transmitting (210) a signal to the cell so that the cell can periodically determine if the user equipment is inside a coverage area of the cell; and
receiving (220) information from the cell to enable neighbor cell measurements if a change of the periodically determined position indicates an exiting of the coverage area of the cell by the user equipment to improve a handover process to another cell.

8. The method (200) according to claim 7, further comprising
establishing a communication connection to the cell and wherein the neighbor cell measurements are only disabled if the communication connection is established.

9. The method (200) according to any of the claims 7 - 8, wherein
the information to enable neighbor cell measurements comprises information about a handover list.

10. An apparatus, comprising:
one or more interfaces configured to communicate with user equipment or a cell; and
processing circuitry configured to control the one or more interfaces and to:
perform the method (100) for a cell acting as relaying system according to any of the claims 1 - 6 by a base station or alternatively the method (200) for user equipment according to any one of claims 7-9 by user equipment.

11. A vehicle comprising the base station apparatus according to claim 10.

12. The vehicle according to claim 11, further comprising
an antenna system; and wherein
an initial antenna system parameter results in a beam which is directed to an outside of the vehicle through a door of the vehicle such that a coverage area of the cell comprises an entering area outside the vehicle.

13. A computer program having a program code for performing the method (100) for a cell acting as relaying system according to any one of claims 1 - 6 by a base station or the method (200) for user by user equipment according to any one of claims 7-9 by user equipment, when the computer program is executed on a computer, a processor, or a programmable hardware component respectively of a base station or of a user equipment, UE.

## Patentansprüche

1. Von einer Basisstation auszuführendes Verfahren (100) zum Verbessern einer Übergabe einer Benutzerausrüstung in einer Zelle eines Mobilkommunikationssystems, wobei die Basisstation als Relaissystem zwischen der Benutzerausrüstung und einer anderen Basisstation fungiert, umfassend:
Übertragen von Informationen zum Deaktivieren von Nachbarzellenmessungen der Benutzerausrüstung innerhalb des Abdeckungsbereichs der Zelle;
periodisches Bestimmen (110) einer Position der Benutzerausrüstung innerhalb eines Abdeckungsbereichs der Zelle basierend auf einem Ankunftswinkel eines von der Benutzerausrüstung empfangenen Signals; und Übertragen (120) von Informationen an die Benutzerausrüstung, um Nachbarzellenmessungen zu aktivieren, wenn eine Änderung der periodisch bestimmten Position ein Verlassen des Abdeckungsbereichs der Zelle durch die Benutzerausrüstung angibt, um einen Übergabeprozess zu einer anderen Zelle zu verbessern.

2. Verfahren (100) nach einem der vorstehenden Ansprüche, ferner umfassend
Bilden eines Strahls mit einem Antennensystem in der Zelle, so dass ein Abgangswinkel des Strahls auf die Position der Benutzerausrüstung gerichtet ist;
Anpassen eines Antennensystemparameters, um einer Bewegung der Benutzerausrüstung mit dem Strahl in dem Abdeckungsbereich der Zelle zu folgen; und wobei
die Informationen zum Aktivieren der Nachbarzellenmessungen übertragen werden, wenn ein vordefinierter Antennensystemparameter von dem Antennensystem ausgewählt wird.

3. Verfahren (100) nach einem der vorstehenden Ansprüche, ferner umfassend
Bilden eines Strahls mit einem Antennensystem in der Zelle, so dass ein Abgangswinkel des Strahls auf die Position der Benutzerausrüstung gerichtet ist;
Anpassen eines Antennensystemparameters, um einer Bewegung der Benutzerausrüstung mit dem Strahl in dem Abdeckungsbereich der Zelle zu folgen; und wobei
die Informationen zum Aktivieren der Nachbarzellenmessungen übertragen werden, wenn sich die Benutzerausrüstung in einem vordefinierten Bereich befindet.

4. Verfahren (100) nach einem der vorstehenden Ansprüche, wobei
ein anfänglicher Antennensystemparameter zu einem Strahl führt, der auf einen Eingangsbereich des Abdeckungsbereichs der Zelle gerichtet ist, so dass, wenn die Benutzerausrüstung in den Eingangsbereich des Abdeckungsbereichs der Zelle eintritt, eine erste Bestimmung der Position derBenutzerausrüstung innerhalb des Eingangsbereichs durch den Strahl des Antennensystems, der mit den anfänglichen Antennensystemparametern gebildet wird, durchgeführt wird.

5. Verfahren (100) nach einem der vorstehenden Ansprüche, wobei
das Verlassen der Benutzerausrüstung angegeben wird, wenn sich die Benutzerausrüstung in einem vordefinierten Ausgangsbereich des Abdeckungsbereichs der Zelle befindet oder sich diesem nähert.

6. Verfahren (100) nach einem der vorstehenden Ansprüche, wobei die Informationen zum Aktivieren von Nachbarzellenmessungen Informationen über eine Übergabeliste umfassen.

7. Von einer Benutzerausrüstung, UE, auszuführendes Verfahren (200) zum Verbessern einer Übergabe der Benutzerausrüstung in einer Zelle eines Mobilkommunikationssystems, wobei die Zelle als Relaissystem zwischen der Benutzerausrüstung und einer Basisstation fungiert, umfassend:
Empfangen von Informationen zum Deaktivieren von Nachbarzellenmessungen der Benutzerausrüstung innerhalb des Abdeckungsbereichs der Zelle;
regelmäßiges Übertragen (210) eines Signals an die Zelle, so dass die Zelle regelmäßig feststellen kann, ob sich die Benutzerausrüstung innerhalb eines Abdeckungsbereichs der Zelle befindet; und
Empfangen (220) von Informationen von der Zelle, um Nachbarzellenmessungen zu aktivieren, wenn eine Änderung der periodisch bestimmten Position ein Verlassen des Abdeckungsbereichs der Zelle durch die Benutzerausrüstung angibt, um einen Übergabeprozess zu einer anderen Zelle zu verbessern.

8. Verfahren (200) nach Anspruch 7, ferner umfassend
Herstellen einer Kommunikationsverbindung zu der Zelle und wobei die Nachbarzellenmessungen nur dann deaktiviert werden, wenn die Kommunikationsverbindung hergestellt ist.

9. Verfahren (200) nach einem der Ansprüche 7 bis 8, wobei
die Informationen zum Aktivieren von Nachbarzellenmessungen Informationen zu einer Übergabeliste umfassen.

10. Einrichtung, umfassend:
eine oder mehrere Schnittstellen, die so konfiguriert sind, dass sie mit einer Benutzerausrüstung oder einer Zelle kommunizieren; und Verarbeitungsschaltkreise, die so konfiguriert sind, dass sie die eine oder die mehreren Schnittstellen steuern und zum:
Durchführen des Verfahrens (100) für eine als Relaissystem fungierende Zelle nach einem der Ansprüche 1 bis 6 durch eine Basisstation oder alternativ des Verfahrens (200) für eine Benutzerausrüstung nach einem der Ansprüche 7 bis 9 durch eine Benutzerausrüstung.

11. Fahrzeug, das die Basisstationseinrichtung nach Anspruch 10 umfasst.

12. Verfahren nach Anspruch 11, ferner umfassend
ein Antennensystem; und wobei
ein anfänglicher Antennensystemparameter zu einem Strahl führt, der durch eine Tür des Fahrzeugs zu einer Außenseite des Fahrzeugs gerichtet ist, so dass ein Abdeckungsbereich der Zelle einen Eintrittsbereich außerhalb des Fahrzeugs umfasst.

13. Computerprogramm mit einem Programmcode zum Durchführen des Verfahrens (100) für eine als Relaissystem fungierende Zelle nach einem der Ansprüche 1 bis 6 durch eine Basisstation oder des Verfahrens (200) für einen Benutzer nach einem der Ansprüche 7 bis 9 durch eine Benutzerausrüstung, wenn das Computerprogramm auf einem Computer, einem Prozessor oder einer programmierbaren Hardwarekomponente einer Basisstation bzw. einer Benutzerausrüstung, UE, ausgeführt wird.

## Revendications

1. Procédé (100) à exécuter par une station de base pour améliorer un transfert d'un équipement utilisateur dans une cellule d'un système de communication mobile, la station de base agissant en tant que système relais entre l'équipement utilisateur et une autre station de base, comprenant :
la transmission d'informations pour désactiver des mesures de cellule voisine de l'équipement utilisateur à l'intérieur de la zone de couverture de la cellule ;
la détermination périodique (110) d'une position de l'équipement utilisateur à l'intérieur d'une zone de couverture de la cellule sur la base d'un angle d'arrivée d'un signal reçu en provenance de l'équipement utilisateur ; et la transmission (120), à l'équipement utilisateur, d'informations permettant de mesurer des cellules voisines si un changement de la position déterminée périodiquement indique une sortie de la zone de couverture de la cellule par l'équipement utilisateur, afin d'améliorer un processus de transfert vers une autre cellule.

2. Procédé (100) selon l'une quelconque des revendications précédentes, comprenant en outre
la formation d'un faisceau avec un système d'antenne dans la cellule de telle sorte qu'un angle de départ du faisceau est dirigé vers la position de l'équipement utilisateur ;
l'ajustement d'un paramètre de système d'antenne pour suivre un mouvement de l'équipement utilisateur avec le faisceau dans la zone de couverture de la cellule ; et dans lequel
les informations permettant de mesurer des cellules voisines sont transmises si un paramètre prédéfini de système d'antenne est sélectionné par le système d'antenne.

3. Procédé (100) selon l'une quelconque des revendications précédentes, comprenant en outre
la formation d'un faisceau avec un système d'antenne dans la cellule de telle sorte qu'un angle de départ du faisceau est dirigé vers la position de l'équipement de l'utilisateur ;
l'ajustement d'un paramètre de système d'antenne pour suivre un mouvement de l'équipement utilisateur avec le faisceau dans la zone de couverture de la cellule ; et dans lequel
les informations permettant de mesurer des cellules voisines sont transmises si l'équipement de l'utilisateur est positionné dans une zone prédéfinie.

4. Procédé (100) selon l'une quelconque des revendications précédentes, dans lequel
un paramètre initial de système d'antenne produit un faisceau qui est dirigé vers une zone d'entrée de la zone de couverture de la cellule, de telle sorte que, si l'équipement utilisateur entre dans la zone d'entrée de la zone de couverture de la cellule, une première détermination de la position de l'équipement utilisateur est réalisée à l'intérieur de la zone d'entrée par le faisceau du système d'antenne formé avec le paramètre initial de système d'antenne.

5. Procédé (100) selon l'une quelconque des revendications précédentes, dans lequel
la sortie de l'équipement utilisateur est indiquée lorsque l'équipement utilisateur est positionné dans une zone de sortie prédéfinie de la zone de couverture de la cellule ou lorsqu'il s'en approche.

6. Procédé (100) selon l'une quelconque des revendications précédentes, dans lequel les informations permettant de mesurer des cellules voisines comprennent des informations concernant une liste de transfert.

7. Procédé (200) à exécuter par un équipement utilisateur, UE, pour améliorer le transfert de l'équipement utilisateur dans une cellule d'un système de communication mobile, la cellule agissant en tant que système relais entre l'équipement utilisateur et une station de base, comprenant :
la réception d'informations permettant de désactiver des mesures de cellules voisines de l'équipement utilisateur dans la zone de couverture de la cellule ;
la transmission périodique (210) d'un signal à la cellule de sorte que la cellule peut déterminer périodiquement si l'équipement utilisateur se trouve à l'intérieur d'une zone de couverture de la cellule ; et
la réception (220) d'informations en provenance de la cellule permettant de mesurer des cellules voisines si un changement de la position déterminée périodiquement indique une sortie de la zone de couverture de la cellule par l'équipement utilisateur, afin d'améliorer un processus de transfert vers une autre cellule.

8. Procédé (200) selon la revendication 7, comprenant en outre
l'établissement d'une connexion de communication avec la cellule et dans lequel les mesures de cellule voisine ne sont désactivées que si la connexion de communication est établie.

9. Procédé (200) selon l'une quelconque des revendications 7 à 8, dans lequel
les informations permettant de mesurer des cellules voisines comprennent des informations concernant une liste de transfert.

10. Appareil, comprenant :
une ou plusieurs interfaces configurées pour communiquer avec un équipement utilisateur ou une cellule ; et une circuiterie de traitement configurée pour commander la ou les interfaces et pour :
réaliser le procédé (100) pour une cellule agissant en tant que système relais selon l'une quelconque des revendications 1 à 6 par une station de base ou alternativement le procédé (200) pour un équipement utilisateur selon l'une quelconque des revendications 7 à 9 par un équipement utilisateur.

11. Véhicule comprenant l'appareil de station de base selon la revendication 10.

12. Véhicule selon la revendication 11, comprenant en outre
un système d'antenne ; et dans lequel
un paramètre initial de système d'antenne permet d'obtenir un faisceau dirigé vers l'extérieur du véhicule à travers une porte du véhicule, de telle sorte que la zone de couverture de la cellule comprend une zone d'entrée à l'extérieur du véhicule.

13. Programme informatique ayant un code de programme pour réaliser le procédé (100) pour une cellule agissant en tant que système relais selon l'une quelconque des revendications 1 à 6 par une station de base ou le procédé (200) pour l'utilisateur par un équipement utilisateur selon l'une quelconque des revendications 7 à 9 par un équipement utilisateur, lorsque le programme informatique est exécuté sur un ordinateur, un processeur ou un composant matériel programmable respectivement d'une station de base ou d'un équipement utilisateur, UE.
